# EUROPEAN PATENT APPLICATION

(11) **EP 2 735 382 A1**
(43) Date of publication of application: **28.05.2014**
(21) Application number: 12007976.9
(22) Date of filing: 27.11.2012
(51) Int. Cl.: B08B 9/08, B08B 9/38

(54) **Machine and method for continuous removal of labels from containers made of plastic material**

(71) Applicant: Amut S.p.A., 28100 Novara (IT)
(72) Inventor: Teruggi, Piergiorgio, I-28100 Novara (NO) (IT)
(74) Representative: Valentini, Giuliano

(57) **Abstract**

A machine and a method for the removal, in a continuous cycle, of labels from plastic containers made of recyclable material. The machine comprises a fixed treatment chamber (10)in which an agitator (20) provided with a plurality of vanes (22) is rotated. Serrated blades are mounted on the vanes to make cuts along random directions in the labels adhering to the surface of said containers and cause detachment thereof.

## Description

### Field of the invention

The present invention relates to a machine for the treatment of plastic containers made of recyclable material, such as bottles for water, beverages or the like made of PET or other recyclable plastic materials. In particular, the present invention relates to a machine that enables the continuous removal of plastic and paper labels from the surface of plastic containers or bottles.

### Background art

Plastic containers having one or more recyclable parts are generally subjected to one or more treatment steps that enable the recovery of the required recyclable plastic materials.

In the case of PET containers, prior art proposes at least one pre-washing or washing step with a heated fluid, if necessary in combination with steam at high temperature, to remove the waste materials, for example consisting of any plastic or paper labels affixed to the containers.

In recent times, PET bottles covered, fully or partly, with shrink-wrap plastic sleeves or wrappers in materials other than PET, such as PV, PETG or PE, with coloured and/or printed surfaces, are becoming more widely used on the market. These new types of shrink-wrap sleeves or wrappers that cover the bottles represent a problem for prior art systems, which operate with a heated or high temperature, washing fluid. In fact, shrink-wrap plastic sleeves or wrappers subjected to heating tend to contract further and therefore to adhere more closely to the outer surface of the containers. Taking into account that containers to be treated are generally deformed, crushed and twisted, the removal of these sleeves wrapped around the containers is very difficult. In the case in which the sleeves or wrappers adhering to the containers are not removed, these containers, although clean, could be rejected during the subsequent automatic steps to sort materials to be recycled (i.e. PET) from those considered contaminating (i.e. PVC, PETG or PE). In fact, automatic sorting is generally carried out by optical systems that could interpret containers still covered by sleeves as containers in different materials to the material to be recycled.

Various dry and wet techniques have been proposed to date for the removal of plastic and paper labels. Some dry techniques for the removal of labels from bottles in material to be recycled are described, for example, in DE-Al-19618363 and in JP-A-11099523. However, these documents provide obligatory steps for the bottles so that cutting means can act axially on the labels adhering to the surface of the bottles. In other words, obligatory steps are, for example, provided wherein the bottle is inserted between a fixed part and a moving vane. The machines using these techniques can only treat a limited flow of bottles, as the labels can only come into contact with the cutting means in this way. Naturally, this limits the flow rate of bottles and, consequently the production levels obtainable with these techniques, unless machines of large size are produced or several machines operating in parallel are arranged in a same plant.

The patent application no. EP-2050516, by the same Applicant, proposes a machine and a method for the removal of labels and contaminants from PET containers during the washing step. The treatment is performed continuously and is carried out with a washing fluid, such as an aqueous solution, which is not heated to prevent further contraction of the shrink-wrap sleeves on the containers. Therefore, the unheated washing fluid softens paper labels without affecting those made of shrink-wrap plastic.

The machine is provided with tearing means that "scratch" the plastic sleeves and paper labels so as to cause, or at least facilitate, detachment thereof from the surface of the container.

The prior art machine described in this document comprises a fixed washing chamber having at least one inlet and at least one outlet for the containers. Inside the chamber is an agitator, having a plurality of vanes, which is rotated at a relatively high angular velocity, for example an angular velocity suitable to obtain, at the ends of the vane, a tangential velocity of at least 2.5 m/s. The chamber is fed with an aqueous washing solution which is expelled continuously, together with the labels and contaminants removed, through a perforated portion of the wall of the washing chamber. The containers are then extracted through an outlet, at which an auger is positioned, operated in a controlled manner to ensure that the containers remain in the chamber for a given period of time, for example selectable according to the type of containers and labels to be treated and/or their degree of contamination.

In this known machine, the tearing means are constituted by pointed elements protruding axially from the surface of the vanes and/or protruding radially from the surface of the inner wall of the washing chamber.

Although the efficacy of this solution in the removal of paper labels and of sleeves made of shrink-wrap plastic material has been verified, it has nonetheless been observed that the greater part of the action for removal of the labels is prevalently carried out by the tearing means of the vanes closest to the outlet.

Even by maintaining a high filling level of containers to be treated inside the chamber, and therefore a high synergic action of removal by rubbing of the containers against one another, the tearing means present on the vanes closest to the output are subject to greater wear, while the tearing means present on the vanes closest to the input have lesser wear.

Consequently, after a certain period of time, this can lead to a decrease in the efficacy of removal of the labels made of shrink-wrap plastic material, while that of the paper labels is always satisfactory.

These observations on the effective performance of the treatment in fact also prevent the agitator from being operated with angular velocities above the velocity established as minimum speed, i.e. the speed able to ensure a tangential velocity of 2.5 m/s at the ends of the vanes. In fact, by increasing the rotation speed of the agitator, the transit time of the container in the initial part of the washing chamber is further reduced, thus further limiting the action performed by the tearing means present on the vanes closest to the inlet for the containers.

### Summary of the invention

The object of the present invention is to propose a machine and a method which enable the efficacious continuous removal of labels of any type, whether plastic or paper, from the plastic containers to which they are affixed.

Another object of the present invention is to propose a machine and a method of the aforesaid type which enable a reduction in the energy and water consumptions required for removal of the labels.

A further object of the present invention is to propose a machine of the aforesaid type of more simple construction and with more compact dimensions with respect to prior art machines.

These objects are achieved by the present invention by means of a machine according to claim 1 and of a method according to claim 10. Further characteristics of the machine and of the method according to the invention are described in the respective dependent claims.

According to a first aspect of the present invention, a machine is provided for the continuous removal of labels from the surface of plastic containers, comprising: a fixed treatment chamber having an inlet for the containers to be treated, at least one outlet for the containers with the labels removed and at least one portion of perforated wall for expulsion of the labels removed; and at least one agitator rotating inside the treatment chamber and having a plurality of vanes distributed along the rotor of the agitator.

The machine according to the present invention advantageously comprises one or more serrated blades mounted on the vanes and adapted to act on the containers during transit thereof inside the treatment chamber to make cuts in random directions in the labels adhering to the surface of the containers and cause detachment thereof. The generic definition "serrated blades" is intended here and hereinafter also to identify "toothed blades".

A machine according to the present invention can thus treat consistent flows of containers. In fact, unlike systems for the dry removal of labels from bottles described in the prior art, the more bottles the are present the better the machine operates, as the bottles block one another while the vanes provided with serrated or toothed blades impact against them. The invention is therefore suitable to treat large numbers of bottles or containers with a single machine of compact size, while according to the prior art, to achieve the same level of production, for example, a plurality of machines in parallel or single machines of large dimensions were necessary.

According to a possible embodiment of the present invention, each of the serrated blades includes at least one serrated profile projecting from the tangential edge of the vane on which it is mounted.

Alternatively, or in combination, each of the serrated blades includes at least one serrated profile projecting from the radial edge of the vane on which it is mounted. The serrated blades are preferably mounted in a removable manner on the vanes to facilitate replacement thereof in case of wear.

According to a possible embodiment, each serrated blade can have, for example, a quadrangular shape in plan view, in which at least two opposite sides of the blade are provided with serrated profiles. A blade of this type, when the serrated profile protruding from the tangential or radial edge of the vane becomes worn, can be rotated by 180° and fixed on the same vane, so as to have a serrated profile in the selected operating position, i.e. radial or tangential.

In the same way, a quadrangular shaped blade can have serrated profiles along all four sides. In this case a same blade can have one or more serrated profiles active during operation of the machine, i.e, a serrated profile in radial direction and/or a serrated profile in tangential direction with respect to the vane on which it is mounted. In case of wear of the active serrated profiles, the vane can be rotated by only 90° and fixed on the same vane having a new or less worn serrated profile protruding from the tangential and/or radial edge of the vane.

A same blade can thus be used several times before requiring to be completely substituted.

The vanes are preferably mounted along the rotor with a pitch angle between 3° and 30° with respect to a plane perpendicular to the rotation axis of the agitator to facilitate correct flow of containers from the inlet to the outlet. For example, the vanes mounted on the rotor in proximity of the inlet can have a greater pitch angle with respect to those mounted on the rotor in proximity of the outlet.

According to another aspect of the present invention, there is proposed a method for the continuous removal of labels from the surface of plastic containers, the method comprising the steps of:
- feeding the containers to a fixed treatment chamber through an inlet;
- rotating at least one agitator, located inside the treatment chamber and having a plurality of vanes distributed along the rotor of the agitator;
- extracting the containers from the treatment chamber through an outlet of the chamber; and
- expelling the labels removed from the surface of the containers through a portion of perforated wall of the treatment chamber.

The method according to the present invention provides for making cuts along random directions in the labels adhering to the surface of the containers using serrated blades mounted on the vanes of the agitator to cause detachment of the labels from the surface of the containers during transit thereof inside the treatment chamber. The agitator is rotated at much greater speeds with respect to those used in prior art treatments. In particular, taking account of the dimensions of the machine and of the inertias of the rotating components, excellent results were obtained by rotating the agitator with angular velocities such as to obtain a tangential velocity, measured at the ends of the blades, of between 15 and 25 m/s.

Similarly to the prior art embodiments, the containers are extracted from the treatment chamber by means of an extraction auger arranged at the outlet.

The extraction auger is operated by an electric motor under the control of appropriate means that also enable regulation of the stay time of the containers in the treatment chamber.

Treatment of the containers is preferably carried out without feeding washing fluids into the treatment chamber.

The advantages of a machine and of a method according to the present invention are many. Firstly, very efficacious dry removal of the labels, both paper and plastic, is achieved without requiring the use of water. This makes it possible to avoid all systems and circuits for the feed, filtration and disposal of the washing fluid.

Any solid and/or heavy contaminants that could damage the machine can be easily removed upstream of the machine, for example using a ballistic screen. Any deposits of sand or soil adhering to the containers are detached from the containers during their transit through the treatment chamber, due to the high rotation speed of the agitator and the high level of rubbing of the containers against one another. Washing with aqueous solutions and, if necessary, detergents can also be carried out in the subsequent processing steps.

### Brief description of the drawings

Further advantages and characteristics of the present invention will be more apparent from the description below, provided by way of non-limiting illustration, with particular reference to the accompanying schematic drawings, wherein:
- Fig. 1 is a longitudinal sectional view of the machine according to a possible embodiment of the present invention;
- Fig. 2 is a cross sectional view along the plane II-II of the machine represented in Fig. 1;
- Fig. 3 is a plan view illustrating the orientation of the vanes along the rotor of the agitator;
- Fig. 4 illustrates a front view of a blade mounted on a vane according to a possible embodiment of the invention;
- Fig. 5 shows the vane of Fig. 4 without the blade;
- Fig. 6 shows only the blade in the embodiment of Fig. 4; and
- Figs. 7 and 8 illustrate another embodiment of a blade that can be mounted on the vane of Fig. 5 with different orientations.

### Detailed description

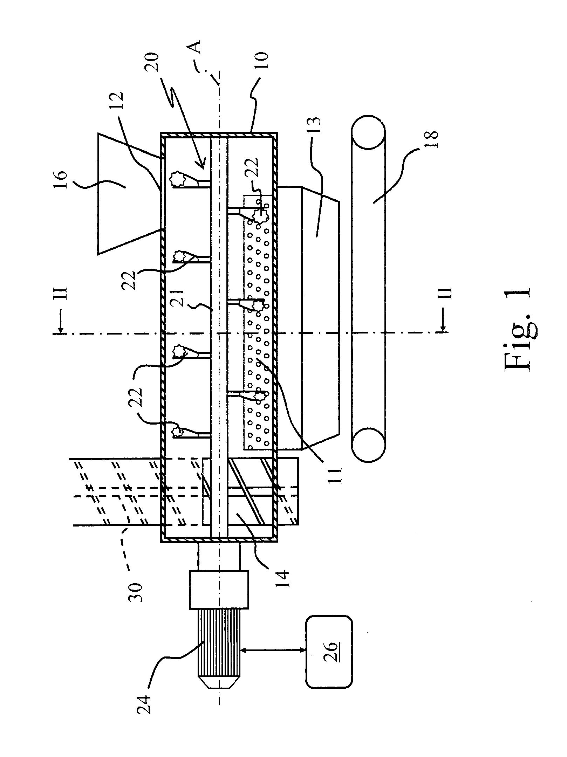

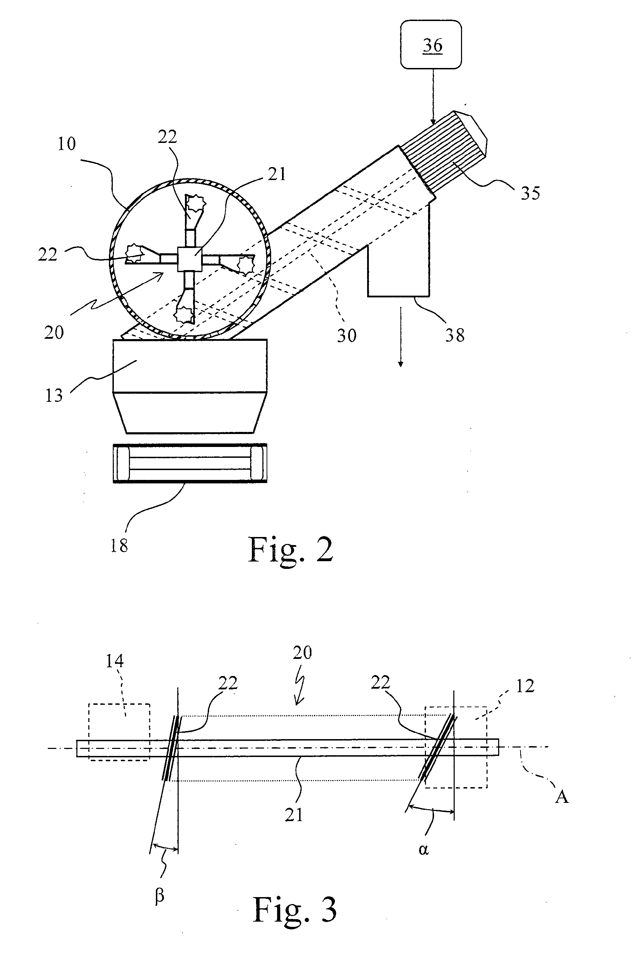

With reference to Figs. 1 and 2, a machine for the removal of labels according to a possible embodiment of the present invention essentially comprises a fixed treatment chamber 10 with cylindrical shape, and an agitator 20 rotated inside the chamber 10 around an axis A coinciding with that of the cylindrical chamber 10.

The embodiment represented here is intended in particular for the treatment of PET bottles, but it is evident that the same principles of the present invention can be adopted for other types of containers, just as for other containers made of recyclable plastic materials.

A plurality of agitation vanes 22 are arranged on the agitator 20, oriented so as to facilitate transit of the containers in the treatment chamber 10 from an inlet 12 to an outlet 14. The containers are fed continuously through a hopper 16 and extracted from the chamber 10, also continuously, by means of an auger 30.

The containers are preferably fed singularly to the treatment chamber 10, although small groups of bottles can be tolerated (for example, up to a maximum of approximately ten bottles).

The friction action between the containers is developed by the vanes 22 of the agitator 20 which rotate the bodies of the plastic containers. Rubbing of the containers against one another and against the toothed vanes 22 produces a vigorous complementary action that leads to removal of the labels.

The agitator is operated by an electric motor 24 driven by a control unit 26. The agitator can be rotated at much higher angular velocities with respect to prior art machines. In particular, the agitator can be rotated at an angular velocity such as to obtain, at the end of the vanes 22, a tangential velocity of between 15 and 25 m/s. For example, during experimental trials of a machine with vanes having a length of around 75 cm, the agitator was rotated at the angular velocity of around 250 rpm obtaining a tangential velocity of just under 20 m/s at the ends of the vanes 22.

The labels removed during transit of the containers in the chamber 10, together with any contaminants, are expelled through a portion of perforated wall 11 arranged in the lower part of the treatment chamber 10. The holes of the wall 11 have predetermined dimensions so as to enable the passage of shreds of labels removed during treatment, for example, holes with a diameter of approximately 50 mm, without however allowing the containers from which the labels are removed to pass through.

The labels expelled through the portion of perforated wall 11 are conveyed by a hopper 13 to a conveying system, this latter illustrated in the embodiment represented here by a conveyor belt 18, to then be disposed of or subjected to further treatments to also select other potentially recyclable materials besides that of the containers or to be compacted to reduce the large volumes that they generate. Alternatively to the conveyor belt 18 illustrated here, continuous removal of the expelled labels can also be carried out, for example, using an auger.

The view of Fig. 2 highlights the system for extraction of the containers from the machine. In the continuous process carried out in the machine according to the present invention, due to the angle of the vanes 22 of the agitator 20, the containers reach the outlet 14 where they are extracted by the auger 30, operated by an electric motor 35.

To guarantee a constant stay time of the material in the treatment chamber 10, and therefore and optimal level of filling of the chamber, the extraction auger 30 is provided with a control unit 36.

The control unit 36 drives the motor 35 to automatically vary the extraction speed of the containers according to the current absorption measured on the motor 24 of the agitator 20. Due to this device it is possible to maintain the stay time of the containers substantially constant in the turbulent phase, so as to guarantee a constant result of removal of the labels, regardless of the flow rate of containers entering the machine.

In other words, a certain level of filling of the treatment chamber 10 corresponds to a certain value of current absorbed by the motor 24 of the agitator 20. Therefore, according to the settings of the control unit 36, the extraction auger 30 modulates its speed to maintain constant the effort required by the agitator 20. This means that, while operating continuously, it is possible to maintain a required level of filling of the treatment chamber 10 which determines the stay time of the containers being treated in the chamber.

As very efficacious removal of the labels is obtained, the containers extracted via the auger 30 pass through the outlet 38 thereof and can be sent directly to the subsequent treatment steps, for example, optical selection of the recyclable materials of interest. Fig. 3 schematically shows the arrangement of the vanes 22 on the rotor 21 of the agitator 20 along the path followed by the containers from the inlet 12 to the outlet 14 (both represented with dashed lines). In proximity of the inlet 12 the vanes 22 are mounted on the rotor 21 with a pitch angle α of between 15° and 30°, while in proximity of the outlet 14 the vanes are mounted on the rotor 21 with a pitch angle β of between 3° and 5°. Both the angles of incidence α and β are intended as measured with respect to a plane perpendicular to the axis A of the rotor 21. The vanes arranged between the two end positions along the rotor 21 can, for example, have angles of incidence with values gradually moving towards those selected for the angles α and β.

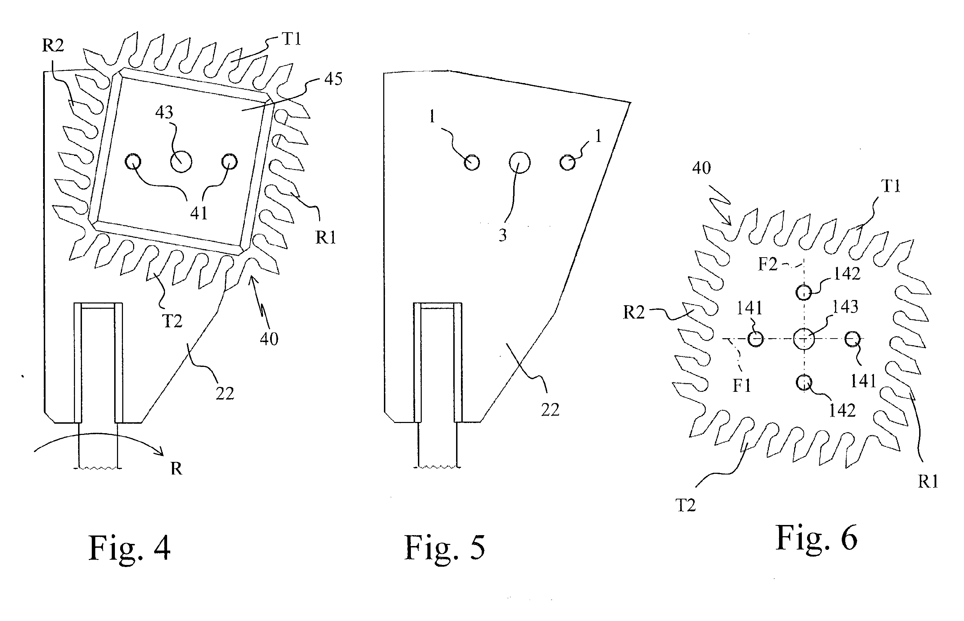

Fig. 4 represents a vane 22 on which a serrated blade 40 according to a possible embodiment of the invention is mounted. The blade 40 is substantially quadrangular in shape and is mounted in a removable manner on the vane 22 together with a plate 45 that includes a central hole 43, intended to receive a fixing bolt of the blade 40, and two holes 41 in which corresponding pins are received to prevent rotation of the blade. Bolts and pins are intentionally not represented for clarity.

The vane 22, shown in Fig. 5 without the blade 40, in turn includes a through hole 3, through which the fixing bolt of the blade passes, and a pair of holes 1 for the anti-rotation pins.

In the embodiment of Figs. 4 and 6, the blade 40 has two serrated profiles T1, T2 arranged along two opposite sides of the quadrangular shape and two serrated profiles R1, R2 arranged along the other two opposite sides. As illustrated in Fig. 6, the blade 40 is provided with a pair of holes 141 aligned along an axis F1 passing through the centre of the hole 143, and by a pair of holes 142 aligned along an axis F2 perpendicular to the axis F1, and also passing through the centre of the hole 143, so as to still be able to receive the anti-rotation pins in the same way as the holes 1. This enables different assembly options of the blade 40 to be chosen when one or more of the serrated profiles are worn, before having to replace them. In Fig. 4, in which the direction of rotation R of the vane 22 is also represented, the blade 40 is mounted on the vane 22 with the serrated profile T1 acting in tangential direction, while the serrated profile R1 is the one operating in radial direction. In the case in which both serrated profiles T1 and R1 are worn after a certain period of time, the blade 40 can be rotated by 180°, thus taking the profiles T2 and R2 to the operating position; the anti-rotation pins will still engage in the holes 1 of the vane 22 and in the holes 141 of the blade 40. However, in the case in which only one of the two profiles T1 or R1 of the blade 40 is more worn than the other, it is possible to mount the blade 40 after a rotation of only 90°, for example taking the serrated profile T1 or T2 to the position currently occupied in Fig. 4 by the serrated profile R1 if this is the one with the most wear; the anti-rotation pins will in this case be engaged in the holes 1 of the vane 22 and in the holes 142 of the blade 40.

However, it is evident that the same mounting possibilities could be achieved by making only two holes on the blade 40, for example only the holes 141, and four holes on the vane 22.

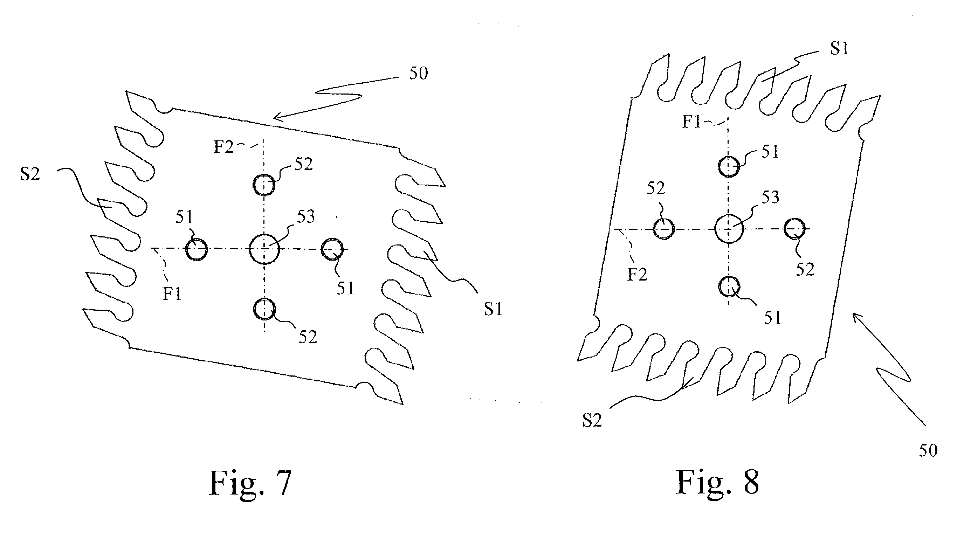

Figs. 7 and 8 illustrate another embodiment of a blade 50 suitable to be installed on a vane 22 such as the one shown in Fig. 5. The blade 50 is provided with only two serrated edges S1 and S2 along two opposite sides of the quadrangular shape. Similarly to the blade 40, the blade 50 comprises a through hole 53 for a fixing bolt, a pair of holes 51 aligned along an axis F1 passing through the centre of the hole 53, and a pair of holes 52 aligned along an axis F2 perpendicular to the axis F1, also passing through the centre of the hole 53, so as to be able also to receive the anti-rotation pins that engage in the holes 1 of the vane 22.

This embodiment is mainly suitable to be used with the serrated profiles S1 or S2 acting only in radial direction (Fig. 7) or acting only in tangential direction (Fig. 8). This can be useful, for example, in the case in which, along the rotor 21, only the radial (or tangential) action of the serrated blades mounted on the vanes 22 proves to be more efficacious. Both the embodiments of the blades 40 and 50 can in any case be mounted simultaneously on a same agitator, for example positioning them appropriately to optimise the efficacy of removal of the labels.

Various modifications can be made to the embodiments represented here without departing from the scope of the present invention. For example, the control units 26 and 36, even if represented as separate units for clarity, can be integrated in a single main control unit that controls other functions of the machine or of the system in which it is installed.

Moreover, the perforated wall 11 can also comprise, in addition to the circular holes, also rectangular through holes delimited, for example, by small cylindrical bars.

## Claims

1. A machine for the continuous removal of labels from the surface of plastic containers, comprising:
- a fixed treatment chamber having an inlet for the containers to be treated, at least one outlet for the containers with the labels removed and at least one portion of perforated wall for expulsion of the labels removed;
- and at least one agitator rotating inside the treatment chamber and having a plurality of vanes distributed along the rotor of said agitator,
**characterised in that** it comprises one or more serrated blades mounted on said vanes and adapted to act on said containers during transit thereof inside said treatment chamber to make cuts in random directions in said labels adhering to the surface of said containers and cause detachment thereof.

2. The machine according to claim 1, wherein each of said serrated blades includes at least one serrated profile protruding from the tangential edge of the vane on which it is mounted.

3. The machine according to claim 1, wherein each of said serrated blades includes at least one serrated profile protruding from the radial edge of the vane on which it is mounted.

4. The machine according to claim 1, wherein said serrated blades are mounted in a removable manner on said vanes.

5. The machine according to claim 1, wherein each of said serrated blades has a quadrangular shape in plan view, and wherein at least two opposite sides of the blade are provided with serrated profiles.

6. The machine according to claim 1, wherein said vanes are mounted along said rotor with an pitch angle between 3° and 30° with respect to a plane perpendicular to the rotation axis of the agitator.

7. The machine according to claim 1, wherein an electric motor is provided to operate said agitator, and wherein control means are provided to rotate said agitator at a speed such as to obtain a tangential velocity, measured at the ends of said vanes, of between 15 and 25 m/s.

8. The machine according to claim 1, wherein an extraction auger is provided arranged at the outlet for said containers.

9. The machine according to claim 8 wherein an electric motor is provided to operate said extraction auger, and wherein control means are provided to regulate the extraction speed of said containers from said treatment chamber.

10. A method for the continuous removal of labels from the surface of plastic containers, the method comprising the steps of:
- feeding said containers to a fixed treatment chamber through an inlet;
- rotating at least one agitator, located inside said treatment chamber and having a plurality of vanes distributed along the rotor of said agitator;
- extracting said containers from said treatment chamber through an outlet of said chamber; and
- expelling said labels removed from the surface of said containers through a portion of perforated wall of said treatment chamber,
**characterised by** making cuts along random directions in said labels adhering to the surface of said containers using serrated blades mounted on the vanes of the agitator to cause detachment of said labels from the surface of the containers during transit thereof inside said treatment chamber.

11. The method according to claim 10, wherein said agitator is rotated at a speed such as to obtain a tangential velocity, measured at the ends of the blades, of between 15 and 25 m/s.

12. The method according to claim 10, wherein said containers are extracted from the treatment chamber using an extraction auger arranged at said outlet.

13. The method according to claim 12, wherein said extraction auger is operated by an electric motor, and wherein the extraction speed of said containers from said treatment chamber is regulated by appropriate control means.

14. The method according to claim 10, wherein the treatment of said containers is carried out without feeding fluids into the treatment chamber.
